# EUROPEAN PATENT APPLICATION

(11) **EP 0 994 409 A2**
(43) Date of publication of application: **19.04.2000**
(21) Application number: 99308022.5
(22) Date of filing: 12.10.1999
(51) Int. Cl.: G06F 3/033

(54) **Index tabs**

(30) Priority: 12.10.1998 SG 9803826
(71) Applicant: Hewlett-Packard Company, Palo Alto, California 94304 (US)
(72) Inventor: Chung, Sun-Woo, Singapore 128798 (SG)
(74) Representative: Powell, Stephen David

(57) **Abstract**

A database program on a personal digital assistance (PDA) includes a set of index tabs (100) for user selection of data items from a list of data items. The list of data items is analysed by the PDA to yield information which is used to configure the set of index tabs. The configuration comprises the steps of analysing (610) the identifiable characters associated with the data items in the list, and assigning (640) at least one of such characters to each index tab dependent on the results of the analysing step.

## Description

This invention relates to a method and a system for providing a set of index tabs for user selection of data items from a list of data items. In particular, the invention relates to a method and system suitable for implementing in a portable computing device.

A known portable computing device includes a touch screen display, a keyboard, a processor, and software allowing a user to manage personal information. This kind of computing device is often called a personal digital assistant or PDA.

One software application typically available on a PDA is a database program which allows a user to store a database of records. Each record may contain, for example, information about an individual friend or business colleague. These records may be filed in the database under certain data fields such as the name of that friend or colleague. Subsequent retrieval of records may be achieved with the help of a list view provided by the database program.

The Windows CE operating system available from Microsoft, USA, operates on compatible PDAs, and includes a suite of personal information management programs collectively known as Microsoft Pocket Outlook™. Pocket Outlook includes a database program known as Contacts. This Contacts database program allows information to be stored in a record format and retrieved from a list view.

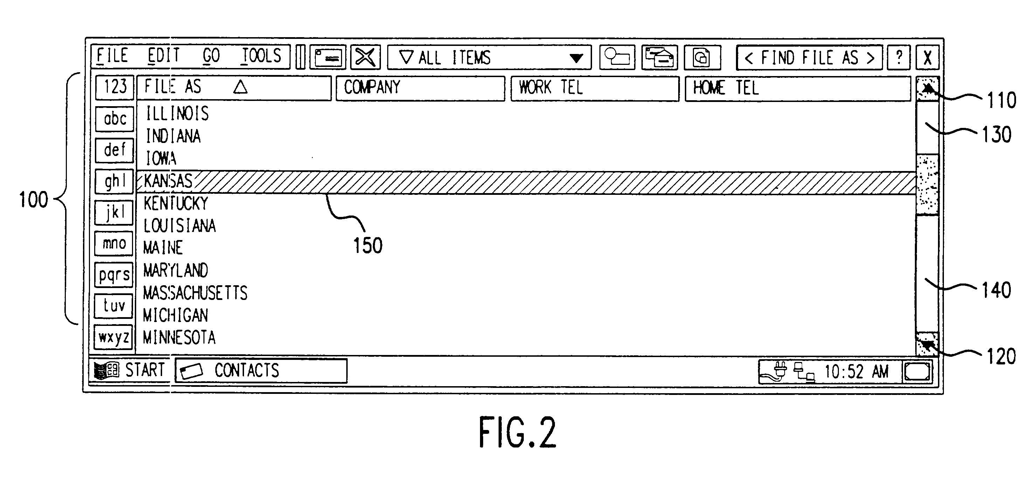

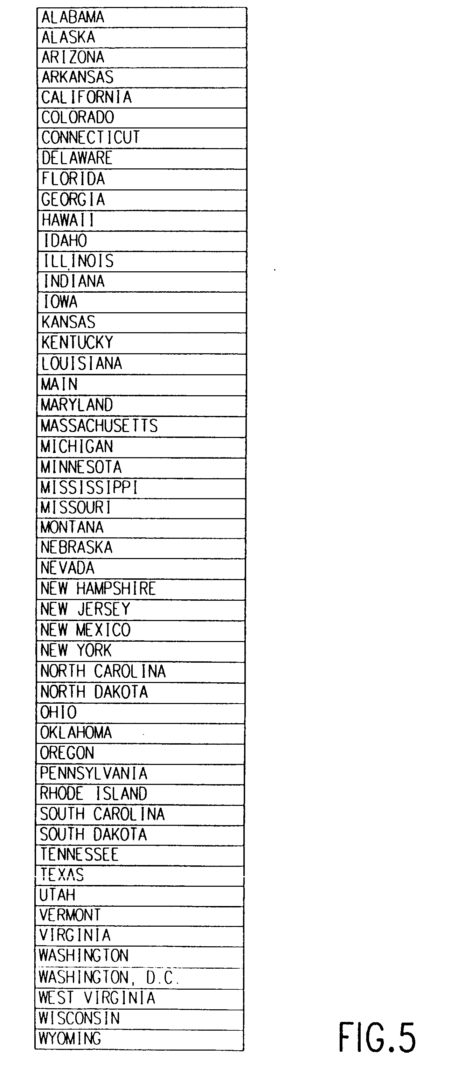

Figure 2 shows the touch screen display of a PDA running Pocket Outlook Contacts in a list view. In this example, fifty-one records are stored in the Contacts program. Each record represents, for demonstration purposes, one of the fifty-one states of the USA as listed in Figure 5. The list view shows a page of state names listed in alphabetical order. The selector 150 is shown highlighting the name "Kansas". To the left of this list, the display shows a set of index tabs 100. The first tab is assigned the numbers 1, 2, and 3 whilst the remaining eight tabs are exclusively assigned the twenty-six letters of the alphabet.

To move around the list in the Contact program, a user can activate, by means of the touch screen, four navigation tools. The first navigation tool is straightforward selection of a name displayed on the page. The second navigation tool is the up and down scroll-bar arrows 110, 120 which moves the selector 150 up or down one line at a time. The third tool is the scroll-bar above and below the slider 130, 140, which moves the selector 150 up or down by one page. The final tool is the index tabs 100 which moves the selector 150 to a data item in the list having a first character the same as one of the characters assigned to the tab. A user should ideally be able to move to a particular data item using a minimum number of navigation operations. The index tab navigation tool provided in the Contacts program has a number of drawbacks. Examples of these drawbacks are described below.

When records are filed according to a numerical reference, the index tabs 100 are only capable of navigating to the first entry in the list (using the first tab) or the last entry in the list (using one of the remaining eight tabs). Navigation within the list is only possible using the other navigation tools. In this case, seven out of the nine index tabs 100 are redundant.

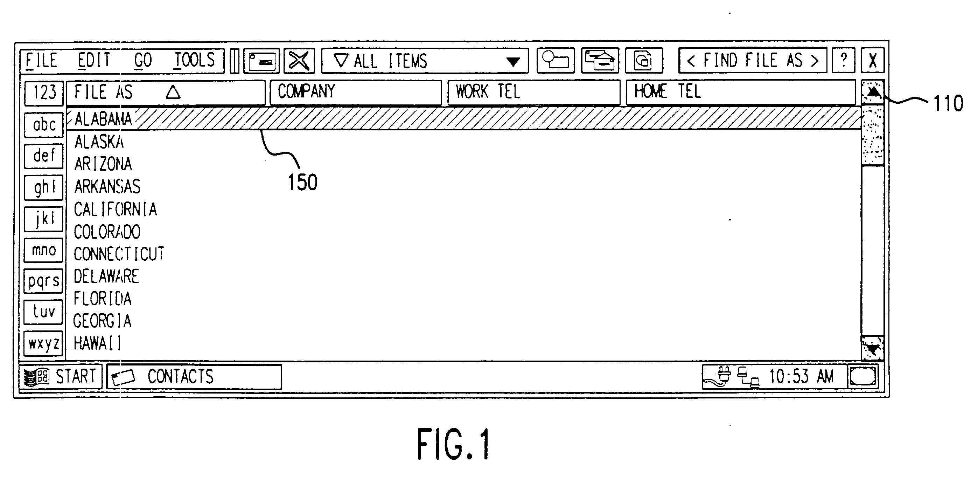

Figure 1 shows the updated screen display of Figure 2, following activation of the first index tab (assigned the numbers 1, 2, and 3). Instead of moving to a numerical entry, as a user would expect, the selector 150 highlights the first entry in the list, i.e. "Alabama". Highlighting of this entry would normally be expected following activation of the second index tab (assigned the letters a, b, and c). The first index tab is therefore redundant for this list. Furthermore, a user presented with the updated display of Figure 1 may not realise that there are no numerical entries. Consequently, the user may activate the up scroll-bar arrow 110 in an attempt to move to a non-existent numerical entry.

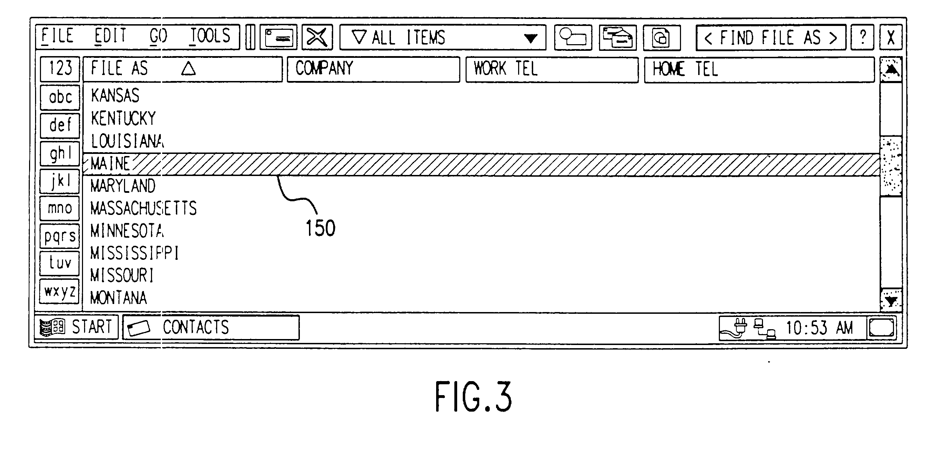

Figure 3 shows the updated screen display of Figure 2, following activation of the sixth index tab (assigned the letters m, n, and o). As expected, the selector 150 highlights the first entry in the list beginning with the letter m, i.e. "Maine". Unfortunately, there are eight entries beginning with m, eight entries beginning with n, and three entries beginning with o. All these entries cannot fit on a single page. Therefore, a user in this case has to perform further navigation operations to move to all of the entries associated with the sixth tab. This further navigation may have been avoided if the letters m and n had been assigned to separate tabs. However, the limited space on the display means that in general letters have to be grouped together in the tabs.

If the fifth tab (assigned the letters j, k, and I) is now activated, the display will update to the display shown in Figure 2. Because there is no entry beginning with the letter j, the first entry beginning with the letter k is shown instead. In this case, therefore, the letter j is redundant in the fifth tab.

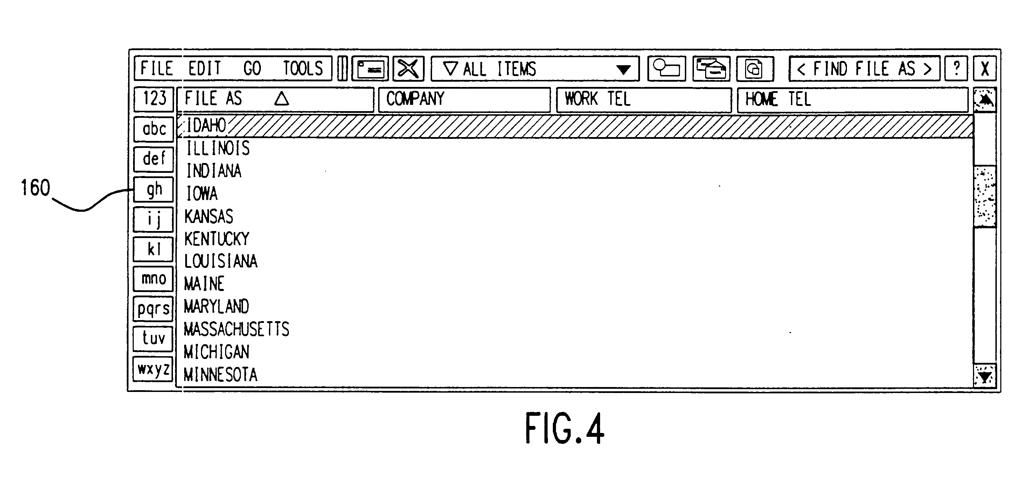

The index tab navigation operation can be improved by decreasing the number of letters grouped in each index tab. This decrease can be achieved by increasing the number of available tabs. Figure 4 shows the touch screen display when the task bar is hidden, whereby the number of index tabs is increased from nine to ten. The extra tab 160 is inserted between the original fourth tab (assigned the letters g, h, and i) and the original fifth tab (assigned the letters j, k, and I). The letters i and j are re-assigned from the original fourth and fifth tabs to the extra tab 160. This re-assignment only provides minimal improvement. The re-assignment would have been more beneficial if it had been applied to the original sixth tab (assigned the letters m, n, and o).

In view of these drawbacks, an improved index tab navigation system is clearly needed.

The present invention provides for the creation of index tabs which are context sensitive. According to the invention, the assignment of characters to each index tab is dependent on the information contained in the list of data item which the tabs index. In this way, characters which would be redundant for a particular list of data items may be excluded from use in the index tabs. The assigned characters are preferably the first characters from the data items in the list.

Ideally, only characters which are relevant for indexing a list of data items are assigned to the index tabs. This provides an advantage in that every character of every tab is used for indexing. Thus, the tabs are used more efficiently than in the prior art system.

Preferably, the assignment of characters to the tabs is determined in order to distribute as evenly as possible the data items between the tabs, whilst maintaining the alphabetical order of characters across the index tabs. For example, when the number of data items for a particular first character is large, that character may be made the sole character assigned to a tab. Conversely, when the number of data items for a few different first characters is small, those characters may all be assigned to one tab.

Suitably, the assignment of characters to the index tabs is performed dynamically so that any changes in the list of data items will be reflected in the tab characters.

Index tabs created in accordance with the invention have the advantage that the index tabs show what first characters are present in the list of data items. Thus a user is able to see at a glance what first characters are absent and will not attempt to select them.

According to another aspect of the present invention, when more than one character is assigned to an index tab, selection of the characters may be achieved by cycling through the characters. A user may perform this cycling by repeated actuation of the index tab.

Figure 1 is a representation of the touch screen display of a PDA running Pocket Outlook Contacts in a list view after actuation of the "123" tab.

Figure 2 is a representation similar to Figure 1, after actuation of the "jkl" tab.

Figure 3 is a representation similar to Figure 1, after actuation of the "mno" tab.

Figure 4 is a representation similar to Figure 2, which shows ten tabs instead of nine tabs as a result of hiding the task bar.

Figure 5 is a list of the fifty-one states of the USA.

Figure 6 is a flowchart showing the steps performed by the PDA processor to provide a set of index tabs in accordance with the invention.

Figure 7 is a table showing information about the first characters of the fifty-one state names and the assignment of these characters to six index tabs.

Figure 8 is a table showing information about the first characters of the fifty-one state names and the assignment of these characters to nine index tabs.

Figure 9 is a bar chart showing the distribution of entries for the prior art index tabs shown in Figure 1.

Figure 10 is a bar chart showing the distribution of entries for the index tabs determined in Figure 8.

The present invention is concerned with providing a set of index tabs. These index tabs may be implemented in a list view of a database program. Such a database program may include functionality equivalent to the functionality provided in the Pocket Outlook Contacts program. This functionality is familiar to those skilled in the art of PDA database programs.

The invention may be embodied in a Windows CE program similar to the Pocket Outlook Contacts program referred to in the introduction. This Windows CE program may be written and compiled using one of a variety of available programming languages, for example, Visual C++ for Windows CE available from Microsoft.

Alternatively, the invention may be embodied in a database program for use in a PDA running an operating system other than Windows CE. For example, a database program embodying the invention could be adapted for use in the Series 5™ PDA available from Psion, UK, or the PalmPilot™ PDA available from 3Com, USA.

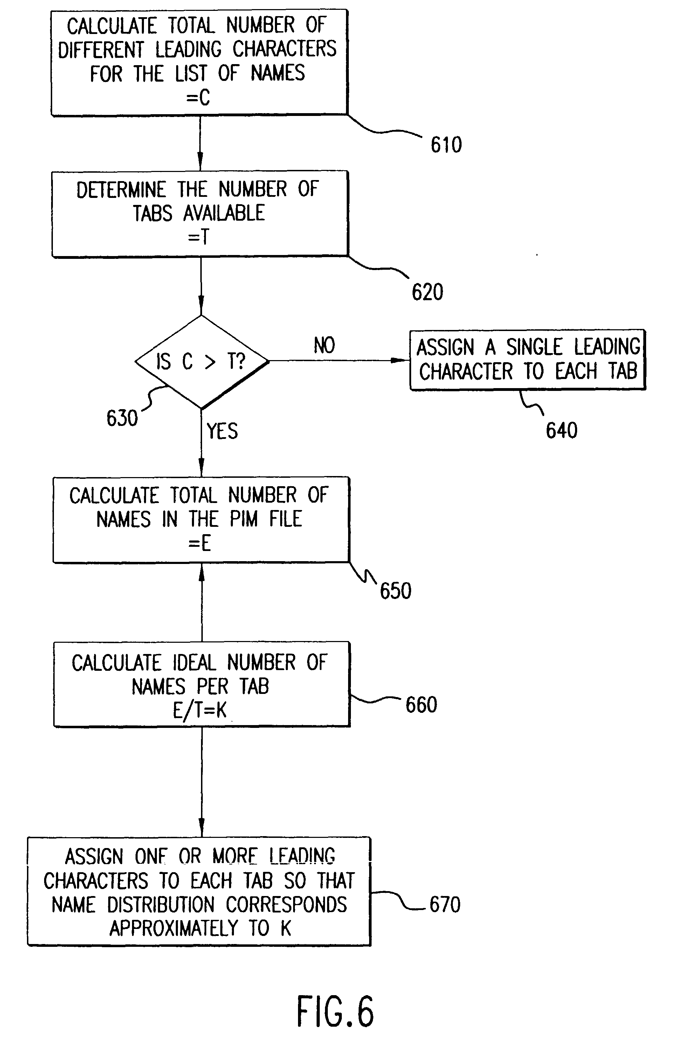

In accordance with a preferred embodiment of the invention, the flowchart of Figure 6 outlines the processing steps performed by a microprocessor of a PDA to provide a set of index tabs for a list view of a database program. Database records which require indexing are stored in a personal information management (PIM) file. Each record in the PIM file is filed under a name which is used for indexing purposes in the list view. For example, the names may be the fifty-one states listed in Figure 5.

The first processing step 610 involves calculating the total number of different first characters for the list of names in the PIM file. This number is represented by the letter C in Figure 6. There are nineteen different first characters in the list of Figure 5 and therefore C is equal to nineteen for this list of names.

The microprocessor is required to determine in the second processing step 620 how many index tabs will be used by the database program. The number of index tabs T may be dependent on various factors such as, for example, the available space on the display of the PDA, or the size of each index tab.

Once C and T have been determined, the microprocessor caicuiates in the third processing step 630 whether the number of different first characters C is greater than the number of available tabs T. If C is not greater than T then the microprocessor may assign a leading character to each tab as shown in step 640. Any index tabs remaining unassigned after this assigning step may be left blank, or the size of the assigned tabs may be increased to fit the height of the display area.

If C is greater than T then the microprocessor must assign more than one leading character to at least one of the index tabs. In this case, the microprocessor performs the processing step 650 of calculating the total number of names in the PIM file. This number E is equal to fifty-one for the list of names in Figure 5.

The microprocessor then calculates in the next processing step 660 the ideal number of names per tab. This number K is equal to the number of names E divided by the number of available tabs T.

The final processing step 670 performed by the microprocessor involves assigning one or more leading characters to each tab in order to distribute as evenly as possible the names between the tabs, whilst maintaining the alphabetical order of characters across the index tabs. This distribution should result in the number of names for each tab approaching the ideal number of names per tab, K.

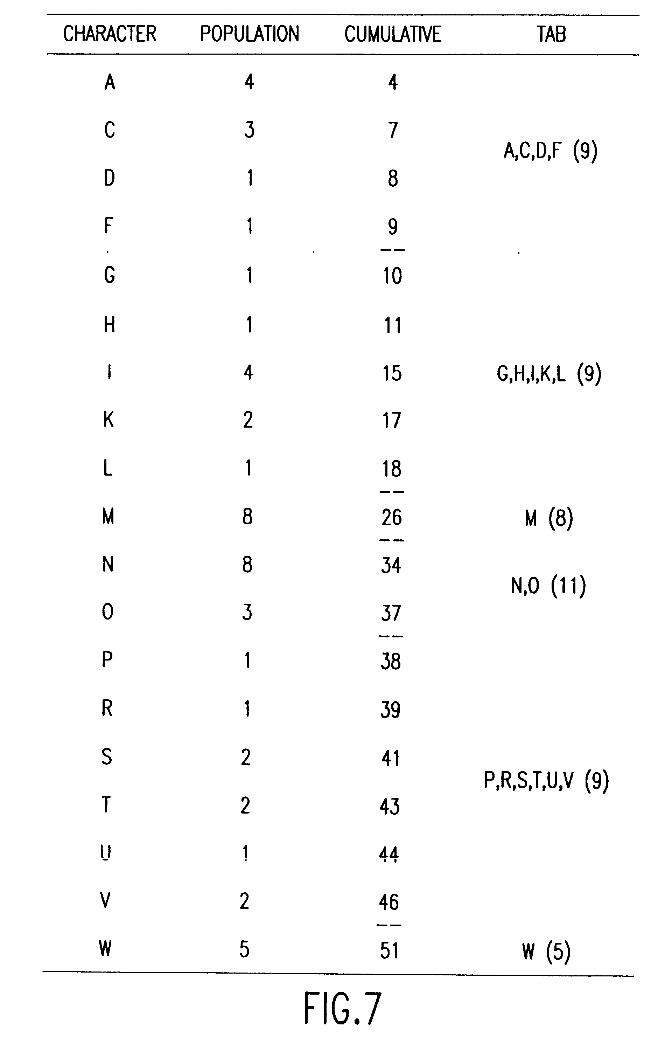

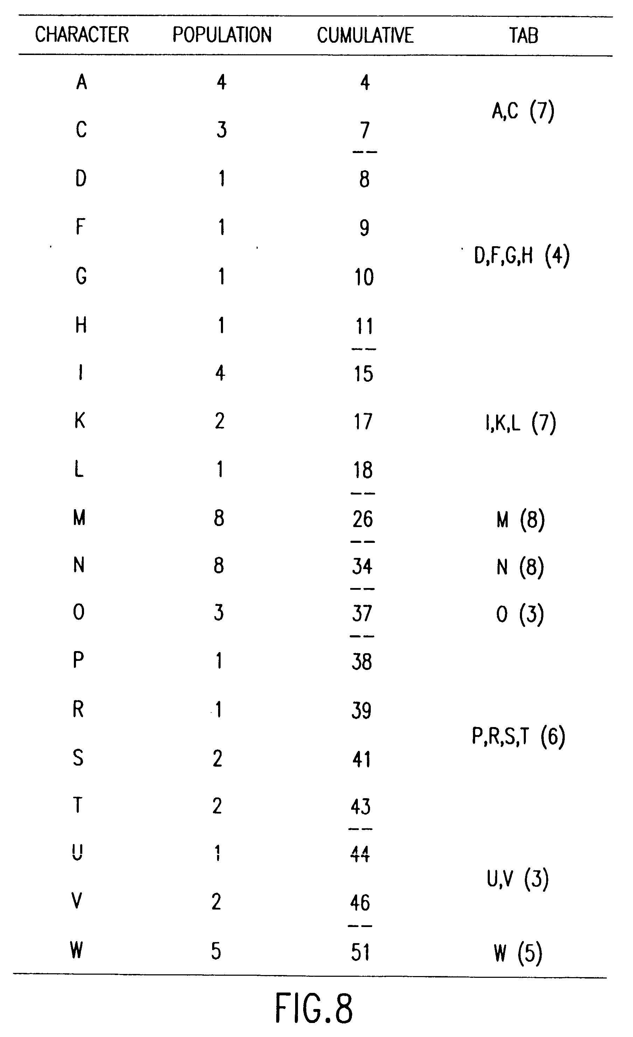

The final processing step 670 will now be described in more detail, by way of example and with reference to Figures 7 and 8.

Figure 7 is a table showing information used by the microprocessor in assigning characters to index tabs. The first column in the table lists the first characters in alphabetical order and retrieved from the list of state names in Figure 5. In the second column, the table shows the number of names having first characters corresponding to the respective character in the first column. The third column shows the cumulative total of names for all the characters up to and including the respective character in the first column.

Finally, the fourth column shows the grouping of assigned characters to each index tab. The value in brackets is the number of names covered by the index tab.

In the example of Figure 7, the number of first characters equals nineteen (C = 19), and the number of tabs equals six (T = 6). C is greater than T.

Therefore, the microprocessor proceeds to determine the number of names in the list (E = 51), and the ideal number of names per tab (K = 51/6 = 8.5).

The value of K is used to segregate or assign the first characters into the six index tabs as follows. Firstly, the value of K is rounded up to the nearest whole number, which in this case is nine. Multiples of nine are then used to split the first characters using the cumulative total column. The first multiple of nine is nine itself. This value corresponds to the cumulative total up to and including the character F. The first split therefore occurs between the characters F and G and the first index tab is assigned the first four leading characters A, C, D, and F. The second multiple of nine is eighteen. This value corresponds to the cumulative total up to and including the character L. The second split therefore occurs between the characters L and M and the second index tab is assigned the next five leading characters G, H, I, K, and L. The third multiple of nine is twenty-seven. This value does not correspond to any cumulative total in the cumulative column. In this situation, the closest cumulative total to the multiple is used, with the higher total being used if there are two closest totals. The closest cumulative total to twenty-seven is the twenty-six which corresponds to the character M. The third split therefore occurs between the characters M and N and the third index tab is assigned the leading character M. Fourth, fifth and sixth tabs are assigned accordingly, as shown in Figure 7.

Figure 8 is a table similar to the table of Figure 7, except that nine index tabs are available (T=9) instead of six. The assignment of characters to the nine index tabs can be compared to the prior art assignment of characters shown in Figures 1 to 3.

The microprocessor determines the ideal number of names per tab (K = 51/9 = 5.67). The value of K is rounded up to the nearest whole number, which in this case is six. Multiples of six are used to split the first characters using the cumulative total column in the same way as described above with reference to Figure 7.

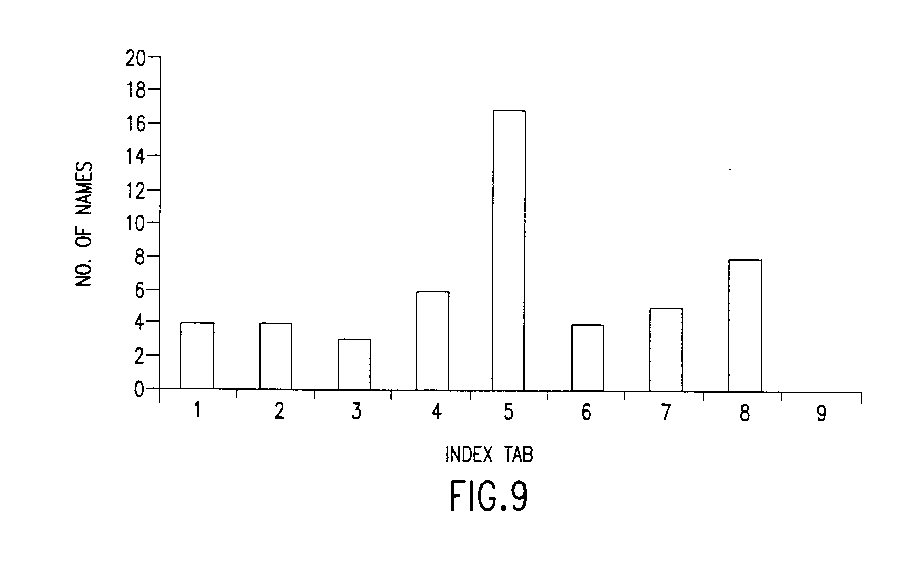

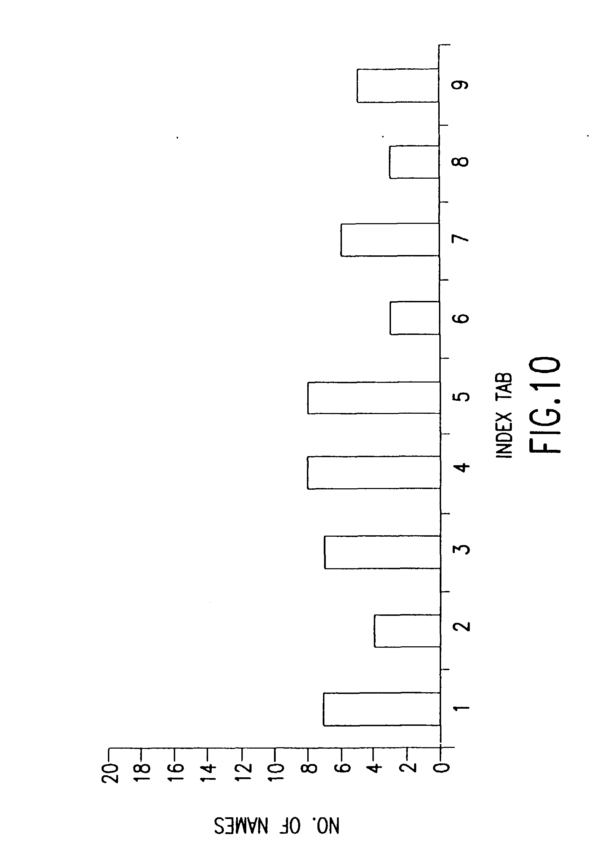

Reference is now made to the bar charts of Figures 9 and 10. Figure 9 shows the number of names covered by each index tab for the prior art index tabs shown in Figures 1 to 3. In contrast, Figure 10 shown the number of names covered by each index tab for the same set of data using the index tabs shown in Figure 8. The distribution of names to the index tabs is more even for the index tabs provided in accordance with the invention. Thus a user navigating with the index tabs according to the present invention is able to select a desired name efficiently.

According to another preferred embodiment of the invention, the microprocessor of the PDA operates to enable selection of more than one name for a single index tab. Specifically, the microprocessor is responsive to repeated actuation of the same index tab to cyc;e through the assigned characters of that index tab. For example, upon actuating the third index tab assigned with the characters I, K, L in Figure 8, the microprocessor will respond by selecting the state "Idaho". Following a second actuation of the third index tab, the microprocessor will respond by selecting the state "Kansas". A third actuation will cause selection of "Louisiana". A subsequent actuation will cycle the tab back to the character I and the state "Idaho" will be selected again.

According to another preferred embodiment of the invention, the microprocessor of the PDA operates to detect when a first character has a particularly high population, for example if there are more than twenty names for that character. In this situation, even having a tab dedicated to that character may not provide good distribution of names across the index tabs. The processor responds to detection of a high population of one character by splicing that character into a plurality of compound characters. For example, if the character P has a population over twenty then it may be spliced into the compound characters Pa and Pm. The second character in the compound character corresponds to the second character in the names. Thus, a tab assigned with the character Pa will select a name beginning with the letters P then A, whilst a tab assigned with the character Pm will select a name beginning with the letter P then M. These compound characters count as first characters in the final processing step 670 in Figure 6. Therefore, if a first character is spliced, the value of C has to be updated to reflect the increase in the number of first characters.

It will be evident in view of the foregoing description that various modifications may be made within the scope of the present invention. For example, instead of being actuated by depression of the touch screen, the index tabs displayed on the screen may be actuated by depression of keys associated with the position of each index tab i.e. so-called soft keys. Also, the invention could be implemented in applications other than personal information management programs.

## Claims

1. A method of providing a set of index tabs (100) for user selection of data items, in which each data item has an associated identifiable character and each index tab is exclusively assigned at least one of such characters, wherein user actuation of a tab causes selection of a data item having an identifiable character corresponding to an assigned character of that tab, the method comprising the steps of analysing (610) the identifiable characters associated with the data items in the list, and assigning (640) at least one of such characters to each index tab dependent on the results of the analysing step.

2. A method as claimed in claim 1, wherein the analysing step comprises determining the complete set of identifiable characters associated with the data items in the list.

3. A method as claimed in claim 1 or claim 2, wherein the assigning step comprises assigning only characters from the set of identifiable characters determined in the analysing step.

4. A method as claimed in any one of claims 1 to 3, wherein the assigning step comprises assigning all the characters from the set of identifiable characters determined in the analysing step.

5. A method as claimed in any one of the preceding claims, wherein the identifiable character associated with each data item is the leading character of each data item.

6. A database system providing a set of index tabs (100) for user selection of data items from a list of data items, in which each data item has an
associated identifiable character and each index tab is exclusively assigned at least one of such characters, wherein user actuation of a tab causes selection of a data item having an identifiable character corresponding to an assigned character of that tab, the system comprising means for analysing the identifiable characters associated with the data items in the list, and means for assigning at least one of such characters to each index tab in response to the results of the analysing means.
